# EUROPEAN PATENT APPLICATION

(11) **EP 0 785 045 A1**
(43) Date of publication of application: **23.07.1997**
(21) Application number: 96306428.2
(22) Date of filing: 05.09.1996
(51) Int. Cl.: B23K 35/363, B23K 35/28

(54) **Solder flux having low melting point**

(30) Priority: 22.01.1996 US 589185
(71) Applicant: FUSION INCORPORATED, Willoughby Ohio 44094 (US)
(72) Inventor: Parhar, Amrit K., Mentor, Ohio 44060 (US)
(74) Representative: Allden, Thomas Stanley

(57) **Abstract**

The invention is directed toward a solder flux and a method of making a solder flux material. The flux includes the cesium fluoroaluminate reaction product of from about 30 to about 75 mole percent of CsF and from about 70 to about 25 mole percent of AlF₃, wherein the flux has a melting point below about 440°C; and, up to about 3 weight percent of unreacted CsF.

## Description

### TECHNICAL FIELD

The present invention generally relates to the joining of aluminum and other metals by soldering. More particularly, the invention relates to a solder material in both paste and flux form, for soldering metals together, especially aluminum. More specifically, the invention relates to such a material which includes a cesium fluoroaluminate complex having a melting point below about 440°C.

### BACKGROUND OF THE INVENTION

Soldering involves the melting of a metal or metal alloy and flow of this melted material between metallic surfaces to join those surfaces together. As can be imagined, much effort has been expended in the development of solder materials for specific applications. A useful solder material for joining one type of metal may have no or little affinity for joining another type of metal.

Aluminum and aluminum alloys in particular have proven to be difficult to join by soldering, due at least in part, to aluminum's relatively low melting point. If a solder material must be heated to a temperature approaching the melting or softening point of the metal to be joined, damage to the subject metal may result. Therefore, it is desirable to have a solder material which has a melting point as low as possible, and yet which will adequately join the subject metal surfaces together.

It is also desirable for the solder material to leave behind no residues or the like which will then corrode the joined surfaces. Commonly used solder fluxes such as zinc chloride are known to leave behind residues corrosive to aluminum surfaces.

Potassium fluoroaluminate complexes are known to function well for joining aluminum and/or aluminum alloy metal surfaces together. Strong bonds between the subject metals and the solder material can be formed. A problem that exists however, is that the melting point of these complexes have always been very high as compared to the aluminum or aluminum alloys to be joined. Aluminum metal has a melting point of 659°C, and some alloys of aluminum have even lower melting points. For example, Aluminum Association alloy 6061 which is commonly used to make aluminum fittings will have a melting point of about 582° to 652°C. When employing high melting point solder materials, it is critical to maintain extremely precise temperature control over the entire soldering process so as not to damage the subject metal surfaces. This of course greatly increases the time and expense of the soldering operation.

For example, U.S. Pat. No. 4,619,716 discloses a potassium fluoroaluminate complex having a melting point of about 560°C. This was not a concern in this patent because the invention was intended to be used as a "brazing" flux and not a solder material. The difference between brazing and soldering is essentially one of temperature. Joining operations above about 450°C are considered to be brazing, while those below that temperature are considered soldering. Therefore, the '716 patent teaches a material to be used in high temperature brazing operations where the relatively high melting point of the brazing flux is not a concern. Conversely, the present invention discloses a solder material for use in low temperature soldering operations. Hence, the melting point of the present material is critical to its usefulness.

Cesium fluoroaluminate complexes have also been investigated for their usefulness in joining aluminum and aluminum alloys. Examples of these include U.S. Pat. Nos. 4,655,385, 4,670,067 and 4,689,092. Each of these patents discloses that the material should be devoid of or free from unreacted CsF and/or KF if used. CsF and/or KF are reaction components used to form the complex. These patents also teach that the melting point of materials are above 440°C and they only exemplify 450°C and above. They also exemplify the materials as used in brazing operations, where again, the melting point of the materials would not be as critical as in an aluminum soldering operation.

A need exists therefore, for a solder material having a low melting point below about 440°C. The material should adequately bond metals including aluminum and/or aluminum alloys together in an otherwise conventional manner. Further, it is most desirable that the material should not leave behind a corrosive residue on the joined metal surfaces after the soldering operation is completed. The material should be dispensable by using a conventional pneumatic dispensing system.

### SUMMARY OF INVENTION

It is therefore, an object of the invention to provide a solder material.

It is another object of the invention to provide a solder material as above, useful for joining metal surfaces together, particularly aluminum surfaces.

It is a further object of the invention to provide a solder material having a low melting point.

It is an additional object of the invention to provide a solder paste material.

It is still another object of the invention to provide a solder flux material.

It is yet another object of the invention to provide a dispensable solder material.

It is again another object of the invention to provide a solder material which will not leave a corrosive residue upon the joined metal surfaces after the soldering operation is completed.

It is also an object of the present invention to provide methods of preparing such solder materials.

In general a solder flux according to the invention and useful for soldering aluminum and aluminum alloy surfaces comprises the cesium fluoroaluminate reaction product of from about 30 to about 75 mole percent of CsF and from about 70 to about 25 mole percent of AlF₃, wherein the flux has a melting point below about 440°C. The flux also comprises up to about 3 weight percent of unreacted CsF.

There is also provided according to the invention a method of preparing a solder flux used to solder aluminum or aluminum alloy surfaces comprising the steps of dissolving from about 30 to about 75 mole percent of CsF in water to form a first solution; adding to the first solution from about 70 to about 25 mole percent of AlF₃; allowing the CsF and the AlF₃ to react forming a reaction product; and drying the reaction product; such that said reaction product has a melting point below about 440°C and includes a cesium fluoroaluminate complex and up to about 3 percent by weight of unreacted CsF.

### PREFERRED EMBODIMENT FOR CARRYING OUT THE INVENTION

There is provided according to the present invention, a material useful for use as a solder flux for joining metal surfaces especially aluminum and/or aluminum alloys. The material includes a cesium fluoroaluminate complex formed by reacting CsF and AlF₃, as will be discussed more fully hereinbelow. The reaction product has a melting point below about 440°C, and may contain up to about 3 weight percent of unreacted CsF. Although the inventive material is particularly suited for use in a low temperature soldering operation, it can also be used for high temperature solder or even brazing operations. The solder materials of the invention can be by themselves or mixed or used with other solder and/or brazing materials.

The material should be dispensable by using a conventional pneumatic dispensing system. To be dispensable, the material should have a viscosity of from about 20,000 to 1,000,000 cps. Of course, viscosities outside that range are within the scope of the invention, and will vary depending upon the dispensing equipment and other similar variables.

To form the reaction product, it is preferred to dissolve from about 30 to about 75 mole percent of CsF in just enough or a slight excess of water, to form a first solution. From about 70 to about 25 mole percent of AlF₃ is then added to the first solution, thereby forming a second solution, and the components are allowed to react forming the cesium fluoroaluminate complex of the present invention. The reaction product is then dried. For example, the reaction product can be an oven or furnace, drum or vacuum dried or the like, preferably at about 200°C. The resulting dry product can then be powdered in a conventional manner for powdering solids, and then used as a solder flux.

The actual particle size of the powdered product will vary depending upon the end-use application. An example of a useful size would be to powder the product such as in a hammer mill or the like, to about -20 to about -120 mesh or finer. Even finer particles may be necessary if, for example, the product is to be dispensed from a needle valve, while coarser sizes can be used for more gross applications.

It is more preferred to employ from about 45 to about 65 mole percent of CsF to from about 55 to about 35 mole percent of AlF₃. In each of the preferred embodiments, the CsF component is dissolved in water as was discussed above. Analysis of the flux prepared as above and having 55 mole percent CsF and 45 mole percent AlF₃ showed a melting point of 436°C.

The powdered flux as described above can also be mixed with a suitable binder material to form a dispensable flux. Useful binders include any that will hold the material in a homogenous suspension and allow it to be applied with a pressurized system. Examples of useful binders include, but are not necessarily limited to, polyisobutylene dissolved in petroleum solvents, paraffin wax-based systems with mineral oil and/or other petroleum solvents, systems with water, glycol and wetting agents, and the like. Potassium silicate in water is also useful.

A solder paste material can also be prepared from the powdered flux as described hereinabove. The paste is formed by mixing the powdered flux with a neutral binder, such as those discussed hereinabove, and a filler metal material. The filler metal is preferably any of those commercially available and commonly used in aluminum solder applications and in the form normally so employed, including zinc, copper, aluminum, nickel, silver, silicon, tin, alloys and mixtures thereof and the like. A preferred solder paste includes from about 10 to about 900 parts by weight of a neutral binder material and from about 0 to about 1100 parts by weight of the filler metal, each based upon 100 parts by weight of the flux. A more preferred paste includes about 100 parts by weight of the powdered flux material, about 100 parts by weight of the binder and about 500 parts by weight of the filler metal material. It is even more preferred to employ about 467 parts by weight of the filler metal.

The filler metal material can be elemental metals, alloys, mixtures thereof and the like. One preferred filler metal material is elemental zinc. Another is a zinc/aluminum alloy having from about 95 to about to about 98 percent by weight of zinc and from about 5 to about 2 percent by weight of aluminum. Although an aqueous solution of the filler metal material and the solder flux can be prepared, it is preferred that the mixture be non-aqueous to limit the potential of reaction between the flux and the filler metal.

Zinc is known to have a melting point of about 415°C. The melting point of solder pastes according to the invention and using zinc or zinc alloy filler metal materials have melting points above 415°C but below about 440°C. It is commonly expected that a solder flux will not have a melting point above that of its filler metal.

When employing the solder flux, dispensable solder flux and solder paste of the present invention to solder metal surfaces including aluminum, it has been found that there is no corrosive residue left behind. Therefore, use of the present invention to join metal surfaces will not be detrimental to those surfaces as has been known with previous solder materials.

Analysis of the solder materials according to the invention has also shown that there is present as much as up to about 3 weight percent of unreacted CsF present in these materials, without there being any detrimental effect upon the non-corrosive, low temperature soldering capabilities of the inventive material. With previous cesium and fluorine containing solder materials, it was critical to ensure that there was no or substantially no unreacted CsF in the solder material. This is not so with the present invention.

### GENERAL EXPERIMENTAL

In order to demonstrate the practice of the present invention, a number of solder materials were prepared as will now be discussed. The flux and paste materials according to the invention were prepared and evaluated according to the following tables. Table I shows the fluxes made according to the invention, while Table II shows the binder systems used for evaluating solder performance.

**TABLE I**

| **Flux No.** | **CsF/A/F**_{**3**} **Ratio (Mole %)** | **Melting (°C)** |
|---|---|---|
| 1 | 25/75 | 441 |
| 2 | 33/67 | 439 |
| 3 | 45/55 | 436 |
| 4 | 50/50 | 437 |
| 5 | 52.5/47.5 | 437 |
| 6 | 55/45 | 436 |
| 7 | 57.5/42.5 | 434 |
| 8 | 60/40 | 427 |
| 9 | 67/33 | 438 |

**TABLE II**

| **Ingredient** | **Binder No.**^{**a**} | | |
|---|---|---|---|
| | 1 | 2 | 3 |
| Polyisobutylene | 7% | - | - |
| Mineral Spirits | 40% | 75% | - |
| Aliphatic hydrocarbon solvent | 53% | - | - |
| Paraffin Wax | - | 15% | - |
| Mineral Oil | - | 5% | - |
| Butyl Rubber | - | 5% | - |
| Potassium Silicate | - | - | 30% |
| Water | - | - | 70% |

| | | | |
|---|---|---|---|
| ^{a} all "%" are percent by weight | | | |

Table III shows the products evaluated for solder results. Soldering results were determined by soldering aluminum alloy 3003 tubes (5/8 inch diameter) to 6063 aluminum 22 millimeter threaded male fittings and visually evaluating the solder joint.

**TABLE III**

| **Product No.** | **Flux, Wt. %** | **Binder, Wt. %** | **Solder; Powder, Wt. %** | **Solder Results** |
|---|---|---|---|---|
| 1 (flux) | 1,60 | 1,40 | * | Unsatisfactory |
| 2 (paste) | 6,15 | 1,15 | 98:2;Zn:Al,70 | Satisfactory |
| 3 (paste) | 7,15 | 3,15 | 98:2;Zn:Al,70 | Satisfactory |
| 4 (paste) | 4,25 | 2,25 | 98:2;Zn:Al,50 | Satisfactory |
| 5 (paste) | 3,20 | 1,20 | 98:2;Zn:Al,60 | Satisfactory |
| 6 (paste) | 5,17.5 | 2,17.5 | 98:2;Zn:Al,65 | Satisfactory |
| 7 (paste) | 7,35 | 2,25 | 98:2;Zn:Al,40 | Satisfactory |
| 8 (flux) | 8,50 | 8,50 | * | Satisfactory |
| 9 (flux) | 9,60 | 2,40 | * | Marginal |
| 10 (flux) | 2,60 | 1,40 | * | Marginal |
| * Solder metal in wire form at 98:2, zinc:aluminum, was used for these tests | | | | |

It will be appreciated that combinations such as Flux Nos. 1 and 6, would also be within the scope of the invention.

It is understood that the present invention is not limited to the specific surfaces to be joined by soldering, the specific reaction components or reaction products or process conditions as set forth in this specification. Similarly, the examples have been provided merely to demonstrate the practice of the subject invention and do not constitute limitations of the invention. Those skilled in the art may select other components and process conditions, according to the disclosure made hereinabove.

Thus, it is believed that any of the variables disclosed herein can readily be determined and controlled without departing from the scope of the invention herein disclosed and described. Moreover, the scope of the invention shall include all modifications and variations that fall within the scope of the attached claims.

## Claims

1. A solder flux for soldering aluminum and aluminum alloy surfaces comprising:
the cesium fluoroaluminate reaction product of from about 30 to about 70 mole percent of CsF and from about 70 to about 25 mole percent of AlF₃, wherein the flux has a melting point below about 440⁰C; and up to about 3 weight percent of unreacted CsF.

2. A solder flux as claimed in claim 1, comprising from about 45 to about 65 mole percent of said CsF and from about 55 to about 35 mole percent of said AlF₃.

3. A solder flux as claimed in claim 1, comprising from about 50 to about 60 mole percent of said CsF and from about 50 to about 40 mole percent of said AlF₃.

4. A solder paste comprising from about 10 to about 900 parts by weight of a neutral binder material and from about 0 to about 1100 parts by weight of a filler metal, each based upon 100 parts by weight of the solder flux of claim 1.

5. A solder paste as claimed in claim 4, wherein said filler metal is selected from the group consisting of zinc, copper, aluminum, nickel, silver, silicon, tin and mixtures and alloys thereof.

6. A solder paste as claimed in claim 5, wherein said filler material is a zinc and aluminum alloy having from about 94 to about 99 weight percent of zinc and from about 6 to about 1 weight percent of aluminum.

7. A dispensable flux comprising 100 parts by weight of the solder flux of claim 1 and from about 10 to about 900 parts by weight of a neutral binder material.

8. A method of preparing a solder flux used to solder aluminum or aluminum alloy surfaces comprising the steps of
dissolving from about 30 to about 75 mole percent of CsF in water to form a first solution; adding to said first solution from about 70 to about 25 mole percent of AlF₃; allowing said CsF and said AlF₃ to react forming a reaction product; and drying said reaction product; such that said reaction product has a melting point below about 440⁰C and includes a cesium fluoroaluminate complex and up to about 3 percent by weight of unreacted CsF.

9. A method of preparing a dispensable solder flux comprising admixing 100 parts by weight of the solder flux prepared according to claim 8 with from about 10 to about 900 parts by weight of a neutral binder material.

10. A method of preparing a solder paste comprising admixing 100 parts by weight of the solder flux prepared according to claim 10 with from about 10 to about 900 parts by weight of a neutral binder material, and with from about 0 to about 1100 parts by weight of a filler metal selected from the group consisting of zinc, copper, aluminum, nickel, silver, silicon, tin and mixtures and alloys thereof.
